# EUROPÄISCHE PATENTSCHRIFT

(11) **EP 2 134 629 B1**
(45) Veröffentlichungstag und Bekanntmachung des Hinweises auf die Patenterteilung: **16.11.2011**
(21) Anmeldenummer: 08716193.1
(22) Anmeldetag: 03.03.2008
(51) Int. Cl.: B65G 15/58, B23Q 1/00, B23Q 7/03

(54) **BANDFÖRDERER SOWIE UMLENKROLL DAFÜR**
CONVEYOR BELT, AND DEFLECTION ROLL THEREFOR
TRANSPORTEUR À COURROIE, ET POULIE DE RENVOI POUR CE TRANSPORTEUR À COURROIE

(30) Priorität: 01.03.2007 DE 202007003178 U
(43) Veröffentlichungstag der Anmeldung: 23.12.2009
(73) Patentinhaber: Polman, Eckhard, 47665 Sonsbeck (DE)
(72) Erfinder: Polman, Eckhard, 47665 Sonsbeck (DE)
(74) Vertreter: GROSSE SCHUMACHER KNAUER VON HIRSCHHAUSEN
(86) Internationale Anmeldenummer: PCT/EP2008/001673
(87) Internationale Veröffentlichungsnummer: WO 2008/104404

(56) Entgegenhaltungen:
- EP-A- 0 662 433
- EP-A- 0 915 039
- WO-A-2006/017953
- DE-A1- 1 943 216
- DE-A1- 2 152 169
- DE-A1- 4 444 280
- DE-A1- 10 117 228
- DE-A1- 10 301 205
- DE-A1- 10 315 627
- DE-A1-102005 007 472
- DE-B- 1 132 941
- JP-A- 10 109 729
- JP-A- 58 113 054
- US-A- 3 794 151
- US-A- 4 948 483
- US-A- 5 320 214

## Beschreibung

### Gebiet der Erfindung

Die Erfindung betrifft einen Bandförderer sowie eine Umlenkrolle dafür nach dem Oberbegriff des Anspruchs 1 bzw. 11.

### Hintergrund der Erfindung

Bandförderer sind z.B. aus der DE 103 15 627 A1, der DE 10 2005 007 472 A1 und der DE 10 2005 007 473 A1 bekannt. Hierbei läuft ein endloser Fördergurt zwischen zwei Umlenkrollen um. Auf dem Fördergurt sind Werkstückaufnahmen vorgesehen, die aus Druckluft über z.B. Venturidüsen ein Vakuum zum Halten der Werkstücke, insbesondere gegen die Schwerkraft, lokal erzeugen. Die Druckluft wird den Werkstückaufnahmen über einen im Fördergurt integrierten endlosen Kanal zugeführt. Die Druckluftversorgung des Kanals erfolgt durch radiale Kanäle in den Umlenkrollen, die am Außenumfang der jeweiligen Umlenkrolle münden und mit fördergurtinnenseitig mündenden Versorgungsöffnungen des Kanals in Deckung bringbar sind. Die radialen Kanäle wiederum sind über jeweils einen axialen Kanal in der Drehachse der jeweiligen Umlenkrolle mit einer Druckluftquelle verbunden.

Der durch die Kanäle und Kanaldurchführungen mechanisch geschwächte Fördergurt muss dabei auch für schwere Werkstücke wie etwa Autofenster mechanisch stabil ausgebildet sein. Zudem müssen die Kanäle hohen Drücken im Dauerbetrieb standhalten. Die Herstellung des Fördergurts mit integrierten Kanälen ist daher aufwendig und teuer. Da er wegen der starken mechanischen Belastung durch die Werkstücke regelmäßig erneuert werden muss, stellt er einen erheblichen Kostenfaktor dar.

Zudem sind die Werkstückaufnahmen der bekannten Bandförderer nicht optimal im Hinblick auf Langlebigkeit, wirtschaftlichen Betrieb und kostengünstige Herstellbarkeit. So sind mechanische Hubvorrichtungen in den Werkstückaufnahmen erforderlich, um zum Aufnehmen eines Werkstücks eine Sauglippe an das Werkstück anzudrücken. Derartige Hubvorrichtungen sind teuer, wartungsanfällig und verbrauchen Energie.

Zudem geht bei den bekannten Bandförderern an den Werkstückaufnahmen, die kein Werkstück halten, kontinuierlich Vakuum verloren, welches teuer erzeugt werden muss.

### Zusammenfassung der Erfindung

Der Erfindung liegt daher die Aufgabe zugrunde, einen Bandförderer sowie eine Umlenkrolle dafür nach dem Oberbegriff des Anspruchs 1 bzw. 11 zu schaffen, die eine vereinfachte Konstruktion mit verminderten Wartungs- und Betriebskosten und kostengünstiger Herstellung ermöglichen.

Diese Aufgabe wird entsprechend den Merkmalen der Ansprüche 1 bzw. 11 gelöst.

Demnach wird ein Bandförderer, insbesondere ein Vakuum-Bandförderer, geschaffen, der einen vom Fördergurt getrennten Energieversorgungsstrang mit energie-übertragenden Strangelementen und daran befestigten Luft- und Elektronikeinrichtungen sowie am Fördergurt befestigten hubvorrichtungslosen Werkstückaufnahmen schafft.

Die Trennung zwischen dem endlosen Förderband, das durch den Werkstücktransport mechanisch belastet wird, und dem endlosen Energieversorgungsstrang, der synchron mit dem Fördergurt mitläuft, führt zu einer deutlichen Kostenreduktion. So müssen bei einem Fördergurtwechsel die teuren elektronischen und gegebenenfalls pneumatischen Komponenten einschließlich der Strangelemente nicht ebenfalls gewechselt werden, da sie eine erheblich längere Lebensdauer aufweisen. Auch ist es kostengünstiger, den Fördergurt ohne integrierte Kanäle herzustellen.

Der Energieversorgungsstrang kann dabei elektrische und/oder pneumatische Energie transportieren. Hierzu enthält er elektrisch leitende Strangelemente wie z.B. ein Stahlseil, oder Strangelemente, die Druckluft, Vakuum oder Flüssigkeiten/Fluide aufnehmen können. Die Strangelemente sind vorzugsweise separat voneinander ausgeführt, können jedoch auch untereinander querverbunden sein.

Zweckmäßigerweise sind die Strangelemente endlos. Sie können jedoch auch endlich sein, um Abschnitte des Energieversorgungsstrangs miteinander zu verbinden, z.B. zwischen einer Elektronikeinrichtung, die eine Steuerschaltung enthalten kann, und einer Lufteinrichtung, die ein steuerbares Ventil aufweist.

Der Fördergurt und die Strangelemente können nebeneinander oder platzsparend übereinander angeordnet sein.

Die Werkstückaufnahmen verbleiben dabei auf dem Transportgurt. Sie sind mit dem Energieversorgungsstrang über Kabel oder dergleichen gekoppelt. Zweckmäßigerweise ist eine Lufteinrichtung einer Werkstückaufnahme zugeordnet, so dass sie bei Aktivierung die Werkstückaufnahme mit Druckluft, Vakuum oder Flüssigkeit gesteuert versorgt. Es kann auch vorgesehen sein, dass eine Lufteinrichtung mehrere Werkstückaufnahmen gleichzeitig versorgt.

Der Bandförderer ist damit insgesamt kostengünstiger herstell- und betreibbar und wartungsärmer.

Die Werkstückaufnahmen können eine Venturi-Düse enthalten, um lokal ein Vakuum zu erzeugen. Sie können statt dessen oder zusätzlich eine mechanische oder magnetische Haltevorrichtung wie etwa einen Greifer bzw. einen Elektromagneten aufweisen, um das Werkstück zu erfassen und zu halten. In diesem Fall kann auf die Lufteinrichtungen verzichtet werden und die Elektronikeinrichtungen können über Kabel mit den Werkstückaufnahmen verbunden sein, um diese anzusteuern und mit Energie zu versorgen.

Die Werkstückaufnahmen benötigen ferner keine Hubvorrichtungen mehr. Statt dessen erfolgt die Auslenkung in Richtung auf das Werkstück hin durch eine Auslenkvorrichtung.

Diese kann eine lokale Verdickung des Förderbands auf der der Werkstückaufnahme ab- und den Umlenkrollen zugewandten Seite sein. Die Verdickung kann anstelle eines Zahns ausgebildet sein, wenn das Förderband ein Zahnriemen ist. Die Verdickung kann auch eine Befestigungsplatte sein, mit der die Werkstückaufnahme am Förderband verschraubt ist. Somit kann die Befestigung der Werkstückaufnahme gleichzeitig als Auslenkvorrichtung dienen.

Die Auslenkvorrichtung kann auch gesteuert ausgelenkt werden und/oder einen Nocken aufweisen, der feststehend oder gesteuert auslenkbar ist. Auch kann eine zusätzliche Umlenkrolle ausgelenkt werden. Die Auslenkung kann mittels elektrischem oder pneumatischem Antrieb erfolgen. Dies führt zu einer einfachen, kostengünstigen und wartungsarmen Konstruktion.

Zudem kann vorzugsweise an jeder Lufteinrichtung und/oder an jeder Werkstückaufnahme ein steuerbares Ventil, insbesondere ein pneumatisches oder elektromechanisches Ventil, vorgesehen sein, mit dem das Vakuum während des Transports des Werkstücks, und/oder wenn kein Werkstück transportiert wird, ohne weiteren Druckluft- oder Vakuumverbrauch aufrecht erhalten werden kann. Damit ergibt sich ein erheblich verringerter Druckluftverbrauch, was zu erheblichen Einsparungen hinsichtlich der durch die Drucklufterzeugung verursachten Kosten führt.

Weitere Ausgestaltungen sind der nachfolgenden Beschreibung, den Figuren und den Ansprüchen zu entnehmen. Die einzelnen Aspekte sind jeweils von eigenständiger erfinderischer Bedeutung und soweit nicht ausdrücklich ausgeschlossen miteinander kombinierbar.

### Figurenbeschreibung

Fig. 1 bis 5 illustrieren jeweils einen Bandförderer.
Fig. 6 illustriert ein Transportsystem mit zwei Bandförderern.
Fig. 7 illustriert den Fördergurt und den Energieversorgungsstrang eines Bandförderers.
Fig. 7b illustriert eine Ausführungsform mit einem zwei Fördergurte speisenden Energieversorgungsstrang.
Fig. 8 illustriert den Energieversorgungsstrang aus Fig. 7.
Fig. 9a illustriert eine Elektronikeinrichtung im Schnitt längs des Energieversorgungsstrangs.
Fig. 9b illustriert die Elektronikeinrichtung im Schnitt quer zum Energieversorgungsstrang.
Fig. 10a illustriert eine Lufteinrichtung im Schnitt längs des Energieversorgungsstrangs.
Fig. 10b illustriert die Lufteinrichtung im Schnitt quer zum Energieversorgungsstrang.
Fig. 11 illustriert die mechanische Befestigung einer Energieversorgungseinrichtung oder einer Lufteinrichtung im Schnitt quer zum Energieversorgungsstrang.
Fig. 12 illustriert die Luft/Vakuum-Zufuhr durch eine Umlenkeinrichtung.
Fig. 13 illustriert eine Werkstückaufnahme.
Fig. 14 bis 16 illustrieren jeweils eine Ausführungsform einer Auslenkeinrichtung für eine Werkstückaufnahme.
Fig. 17 illustriert einen Bandförderer mit einer Auslenkeinrichtung in Form eines Schlittens.
Fig. 18a, 18b, 18c und 18d illustrieren einen Zahnriemen mit Kontaktstiften in Seitenansicht, Perspektivansicht, Stirnansicht bzw. im Detail.
Fig. 19a illustriert eine Umlenkvorrichtung mit einer Nut in der Verzahnung.
Fig. 19b ist eine Perspektivansicht der Umlenkvorrichtung der Fig. 19a mit weggelassener rechter Verzahnung.
Fig. 19c ist eine Seitenansicht der Fig. 19b.
Fig. 19d und 19e illustrieren Details der Fig. 19a bis 19c.
Fig. 20 zeigt einen Abschnitt eines Energieversorgungsstrangs.
Fig. 21 a illustriert einen Energieversorgungsstrang.

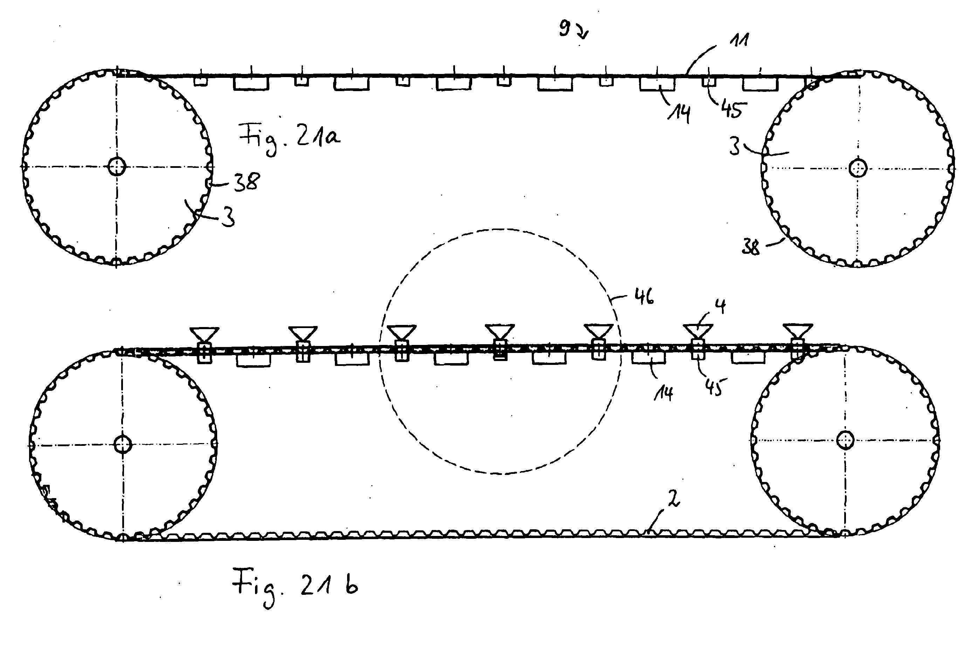

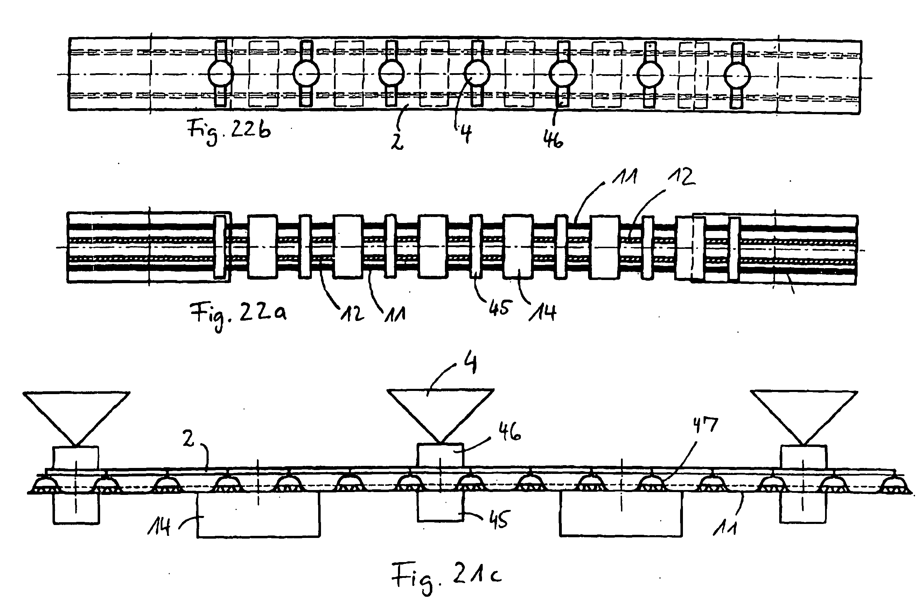

Fig. 21 b illustriert den Energieversorgungsstrang der Fig. 21 a mit Fördergurt.
Fig. 22a illustriert einen Abschnitt eines Energieversorgungsstrangs.
Fig. 22b illustriert den Abschnitt der Fig. 22a mit Fördergurt.

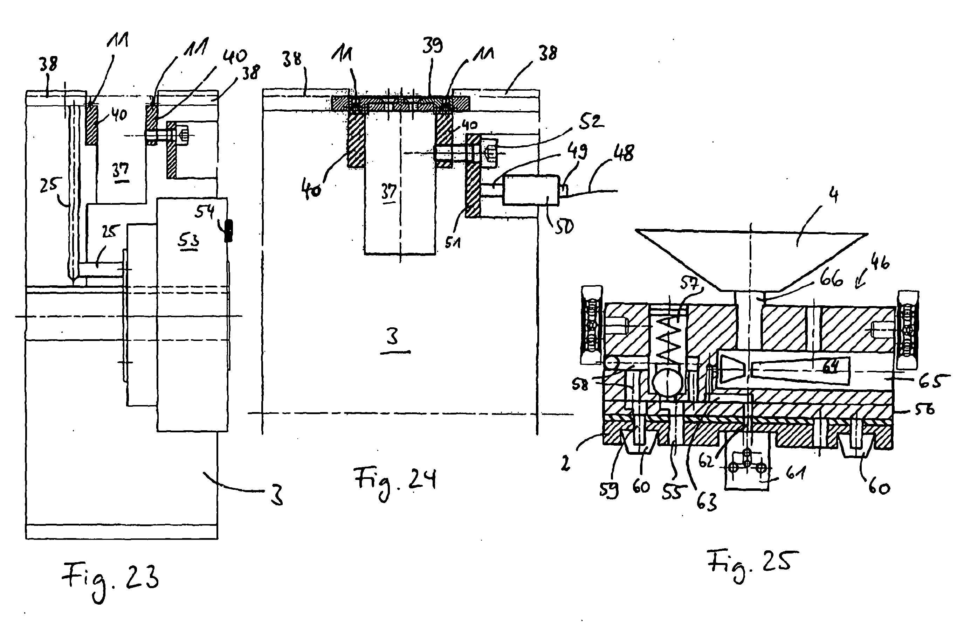

Fig. 23 zeigt einen Querschnitt durch eine Umlenkrolle 3.
Fig. 24 zeigt die obere Hälfte des Querschnitts der Fig. 23 ohne Luftelemente, aber dafür mit Elementen für die Einspeisung elektrischer Energie und/oder Signale.
Fig. 25 zeigt eine Ausgestaltung einer Ventileinrichtung 46 im Schnitt.

### DETAILLIERTE BESCHREIBUNG EINZELNER AUSFÜHRUNGSFORMEN

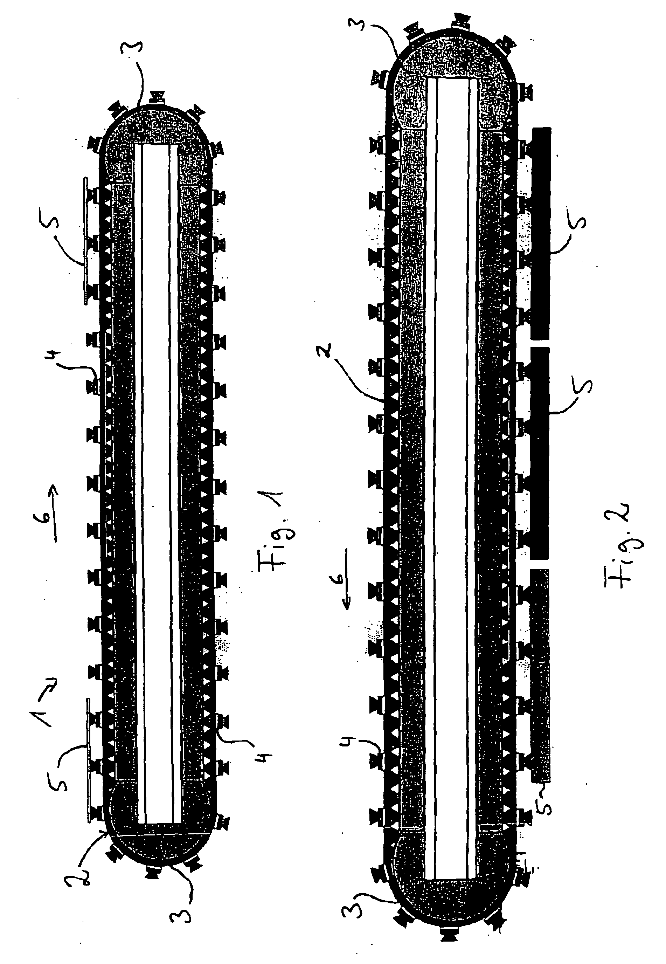

Die Funktionsweise des erfindungsgemäßen Bandförderers ist in Figuren 1 bis 6 schematisch illustriert.

Der in Figur 1 beispielhaft dargestellte Bandförderer 1 weist einen endlosen Fördergurt 2 auf, der zwischen Umlenkvorrichtungen 3 umläuft und Werkstückaufnahmen 4 aufweist. Die Werkstückaufnahmen 4 können Werkstücke 5 aufnehmen und entlang der Förderrichtung 6 transportieren.

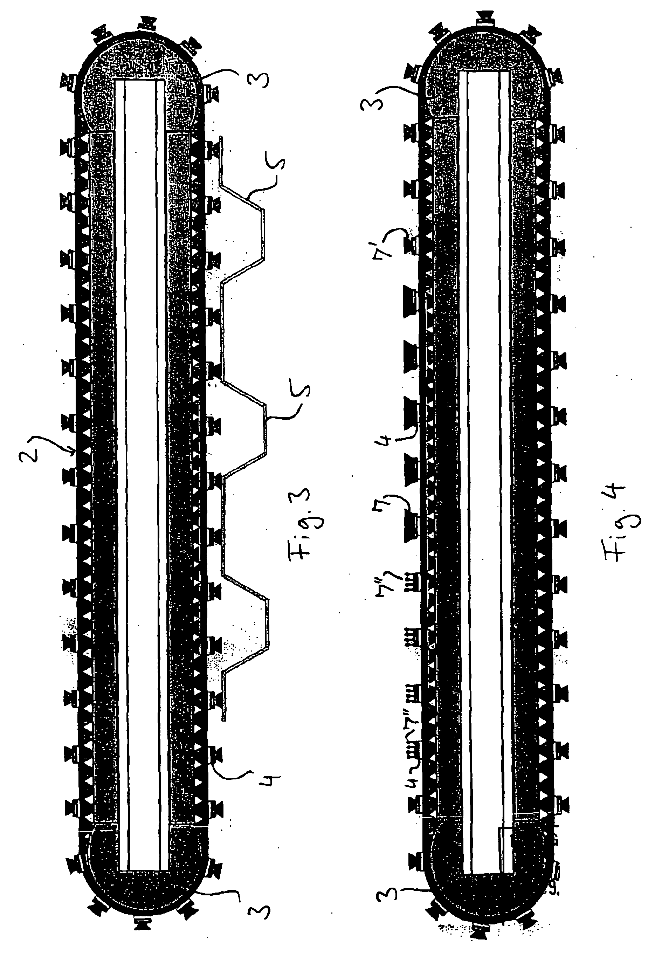

Der Transport kann in wie Figur 1 dargestellt liegend oder wie in Figur 2 dargestellt hängend erfolgen. Dabei können verschiedene Werkstücke 5 transportiert werden, beispielsweise Platinen, Metallplatten, Glasplatten, Fensterscheiben, KFZ-Teile etc. Die Werkstücke 5 müssen dabei nicht flach sein sondern können, wie es in Figur 3 illustriert ist, beliebig geformt sein.

Abhängig von der Größe der Werkstücke sind die Werkstückeaufnahmen 4 bemessen und ausgeführt. Beispielsweise können für große und schwere Werkstücke 5 die Werkstückaufnahmen 4 jeweils große Werkstückkontaktelemente 7 aufweisen, die in Figur 4 beispielhaft als Saugnäpfe dargestellt sind und durch die Werkstückaufnahmen mit einem Vakuum beaufschlagt werden, um die Werkstücke 5 saugend festzuhalten. Für filigrane und kleine Werkstücke 5 können die Werkstückkontaktelemente 7" entsprechend klein ausgestaltet sein. Zudem ist es zweckmäßig, in diesem Fall mehrere Werkstückkontaktelemente 7" an einer Werkstückaufnahme 4 vorzusehen, vgl. Figur 4. Mittelgroße Werkstückkontaktelemente 7' sind in der Figur 4 ebenfalls illustriert. Zweckmäßigerweise sind an einem Fördergurt 2 nur gleichgroße Werkstückkontaktelemente 7, 7', 7" vorgesehen.

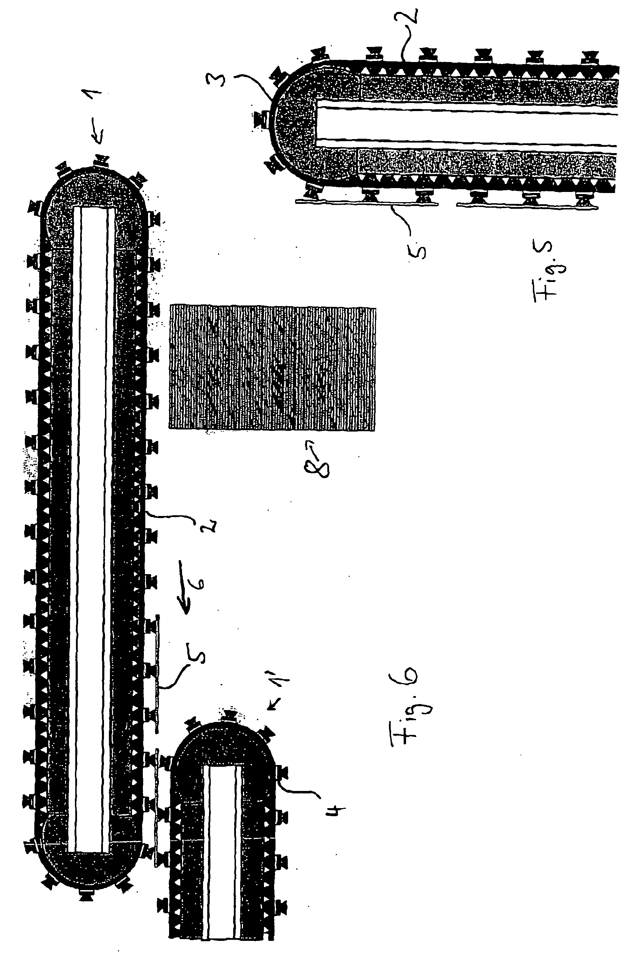

Mit dem erfindungsgemäßen Bandförderer 1 ist auch ein Vertikaltransport von Werkstücken 5 möglich, vgl. Figur 5.

Ferner ist es möglich, mehrere Bandförderer 1 zu einem Fördersystem zu kombinieren, vgl. Figur 6. So kann beispielsweise ein Bandförderer 1 zum Entstapeln von Werkstücken 5, z.B. Platinen oder Autoscheiben, von einem Stapel 8 verwendet werden. Hierbei wird jeweils ein Werkstück 5 vom oberen Ende des Stapels 8 entnommen und in der Förderrichtung 6 z.B. hängend einem weiteren Bandförderer 1 zugeführt, der der weiteren Verteilung der Werkstücke 5 für den jeweiligen Produktionsprozess dient.

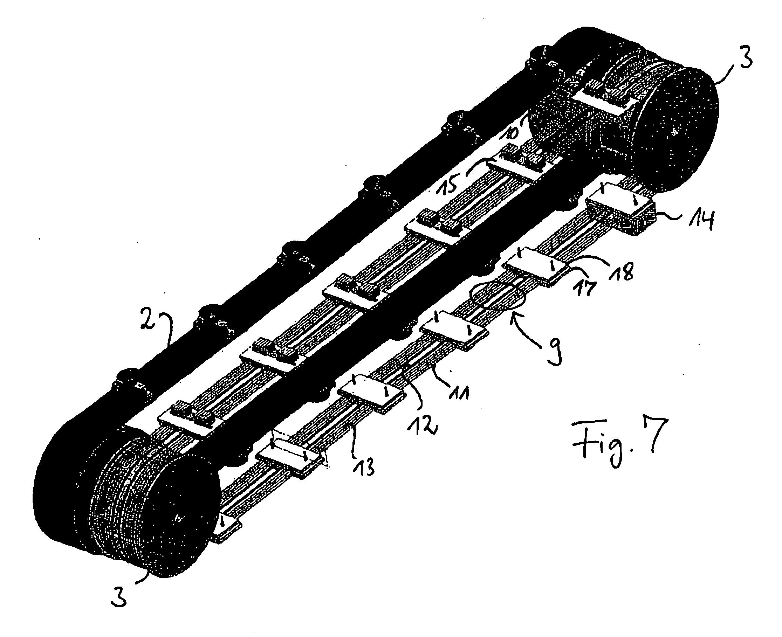

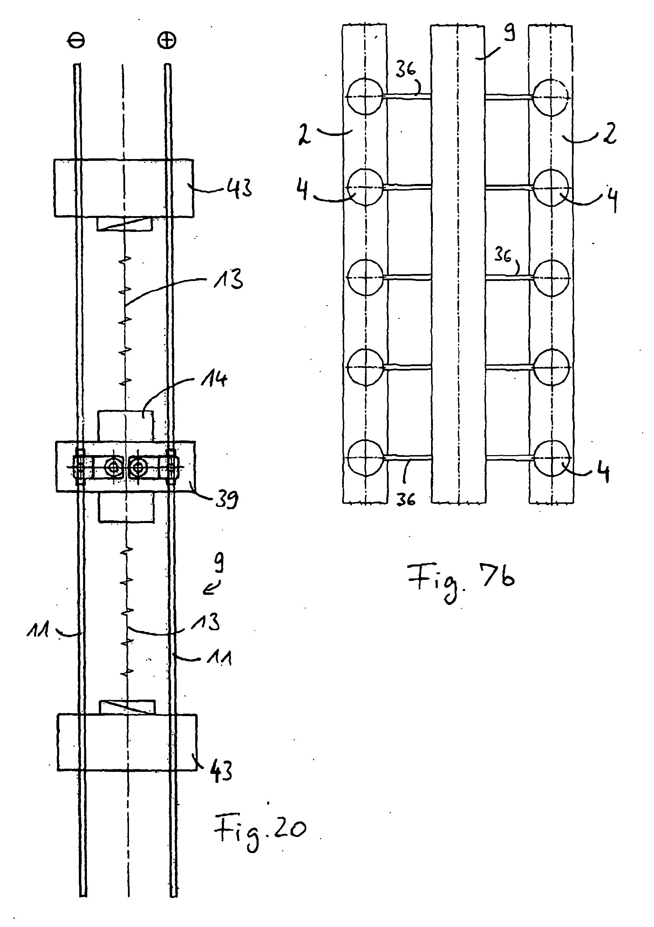

Eine bevorzugte Ausführungsform des Bandförderers 1 mit einem Fördergurt 2 und einem davon getrennten Energieversorgungsstrang 9 ist in Figur 7 dargestellt.

In dieser Ausführungsform läuft der Fördergurt 2 beispielhaft um zwei Umlenkvorrichtungen 3, die hier als Umlenkrollen ausgeführt sind, um. Der Fördergurt 2 ist als Zahnriemen ausgestaltet. Die Zähne des Zahnriemens greifen in entsprechende Nuten 10 am Außenumfang der die Umlenkvorrichtung 3 bildenden Umlenkrollen ein. Durch Drehantrieb der Umlenkrollen wird somit über die Verzahnung der Fördergurt 2 in der Förderichtung 6 angetrieben.

Der Fördergurt 2 dient hier einzig der Kraftaufnahme und der Kraftübertragung zum Tragen bzw. Transportieren der Werkstücke 5 und der Werkstückaufnahmen 4. Er ist entsprechend dick und stabil dimensioniert. Die Energieversorgung der Werkstückaufnahmen 4 erfolgt über den synchron mitlaufenden Energieversorgungsstrang 9. Dieser verläuft in Fig. 7 rein beispielhaft benachbart zum Fördergurt 2 über dieselben Umlenkvorrichtungen 3, kann jedoch auch unter dem Fördergurt 2 oder anderweitig angeordnet sowie mit kürzerem oder längerem Umfang ausgeführt sein, solange er sich synchron mitbewegt.

Der Energieversorgungsstrang 9 umfasst ein oder mehrere Strangelemente 11, 12, 13, die hier einander benachbart angeordnet sind, jedoch auch übereinander angeordnet sein können, und trägt Elektronikeinrichtungen 14 und Lufteinrichtungen 15.

Die Strangelemente 11, 12 des Energieversorgungsstrangs 9 sind zweckmäßigerweise endlos, während die Strangelemente 13 nicht endlos sind.

Die endlosen Strangelemente 11 sind hier beispielhaft als Aderleitungen ausgestaltet, d.h. als Drahtleitungen oder Litzenleitungen oder Stahldrähte oder dergleichen. Die Energieeinspeisung in die Strangelemente 11 erfolgt dabei an wenigstens einer Umlenkrolle. Hierbei können die Strangelemente 11, die elektrische Energie leiten, beispielsweise über Kontaktstifte oder Schleifkontakte in bzw. an der Umlenkrolle angreifen. Hierzu können an der Umlenkrolle Ringnuten oder Kontaktbuchsen aus leitfähigem Material gebildet sein, so dass ein elektrischer Kontakt zu den Schleifkontakten bzw. Kontaktstiften des Strangelements 11 gebildet wird. So kann das Strangelement beispielsweise mit einer Versorgungsspannung und/oder mit elektrischen Signalen beaufschlagt werden, wobei die Verbindung zu einer externen stationären Energieversorgung oder einem externen stationären Steuercomputer beispielsweise über Schleifkontakte der Umlenkrollenwelle auf bekannte Art und Weise hergestellt wird.

Vorzugsweise werden wenigstens zwei Strangelemente 11 verwendet, um einen Zweidraht-Bus, z.B. nachdem ASi-Standard, im Energieversorgungsstrang 9 zu implementieren. Über den Zweidraht-Bus können sowohl eine Versorgungsspannung als auch Datensignale störsicher übertragen werden. Die Versorgungsspannung und die Datensignale werden von Elektronikeinrichtungen 14 abgegriffen, von denen in Fig. 7 nur eine dargestellt ist, jedoch vorzugsweise mehrere vorgesehen sind. Die Elektronikeinrichtungen 14 sind damit vorzugsweise individuell adressierbar- und steuerbar und können gegebenenfalls Signale an den Steuercomputer zurückgeben.

Das endlose Strangelemente 12 ist hier beispielhaft als Luftkanal und zudem zweckmäßigerweise doppelt ausgeführt, d.h. als innen hohle endlose Rohrleitung z.B. aus Kunststoff oder dergleichen. Die Luftkanäle verbinden die Lufteinrichtungen 15 untereinander und sind vorzugsweise mit Druckluft oder gegebenenfalls mit Vakuum beaufschlagbar. Die Lufteinrichtungen 15 geben das Vakuum oder die Druckluft über Versorgungsleitungen vorzugsweise gesteuert an die Werkstückaufnahmen 4 weiter. Die Versorgungsleitungen 36 sind in Fig. 7 zur Vereinfachung nicht dargestellt, jedoch in Fig. 7b illustriert, und zwar beispielhaft für eine weitere Ausführungsform, in der ein Energieversorgungsstrang 9 zwei benachbarte Fördergurte 2 speist. Zweckmäßigerweise ist dabei jede Lufteinrichtung 15 genau einer Werkstückaufnahme 4 zugeordnet und kann sich benachbart zu dieser am Energieversorgungsstrang 9 befinden. In den Werkstückaufnahmen 4 kann mittels einer Venturidüse oder dergleichen aus der Druckluft ein Vakuum erzeugt werden, mit dem die Werkstücke 4 gehalten werden.

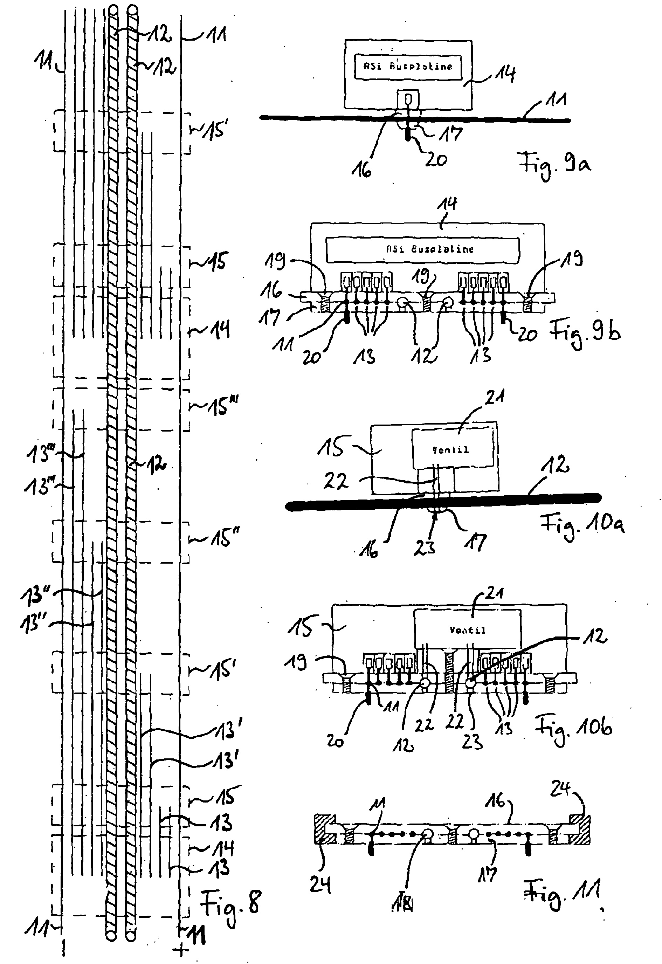

Die Strangelemente 13 zwischen den endlosen hier randseitigen Strangelementen 11, 12 sind nicht endlos. Sie dienen der Signalübertragung und/oder Energieversorgung zwischen den Elektronikeinrichtungen 14 und den Lufteinrichtungen 15. Zweckmäßigerweise übernimmt in der dargestellten Ausführungsform eine Elektronikeinrichtung 14 die Steuerung mehrerer Lufteinrichtungen 15, 15', 15", 15"', vgl. Figur 8. Hierzu erstrecken sich Strangelemente 13 zwischen der Elektronikeinrichtung 14 und der ersten Lufteinrichtung 15, Strangelemente 13' zwischen der Elektronikeinrichtung und der zweiten Lufteinrichtung 15', Strangelemente 13" zwischen der Elektronikeinrichtung 16 und der Lufteinrichtung 15" sowie Strangelemente 13'" zwischen der Elektronikeinrichtung 14 und der Lufteinrichtung 15"'. Zweckmäßig ist eine Anzahl von 3, 4, 5, 6 oder 7 Lufteinrichtungen 15, die einer Elektronikeinrichtung 14 zugeordnet sind und von dieser über die Strangelemente 13 individuell gesteuert werden. Die Strangelemente 13, die zwischen einer Elektronikeinrichtung und einer Lufteinrichtung 15 verlaufen, sind dabei zweckmäßigerweise wie dargestellt Zweidrahtleitungen.

Die Befestigung der Elektronikeinrichtungen 14 und der Lufteinrichtungen 15 am Energieversorgungsstrang 9 ist in Figuren 9 bzw. 10 detaillierter illustriert.

Die in Figur 9a im Schnitt längs des Strangelements 11 dargestellte Elektronikeinrichtung 14 ist mittels zweier Platten 16, 17, die quer zum Energieversorgungsstrang 9 verlaufen und diesen zwischen sich einschließen, auf den Energieversorgungsstrang 9 aufgeklemmt. Hierzu sind die Platten 16, 17 beispielsweise wie in Figur 9b dargestellt mittels Schrauben 19 verschraubt oder anderweitig fest miteinander verbunden. Für die Strangelemente 11, 12, 13 können geeignete Aussparungen vorgesehen sein, damit sie nicht zerquetscht werden. Die Strangelemente 11, 13 sind jeweils elektrisch mit Anschlüssen der Elektronikeinrichtung 14 verbunden, beispielsweise durch Klemmen mit Kontaktstiften zu den Strangelementen. Zusätzlich sind die Strangelemente 11, die der Energie und Signalversorgung nach außen dienen, mit Kontaktelementen 20, beispielsweise Schleifkontakten oder Kontaktstiften, insbesondere federvorgespannten Kupfer- oder Kohlestiften, elektrisch verbunden. Die Kontaktelemente 20 gelangen in elektrischen Kontakt mit entsprechenden Gegenkontaktelementen an den Umlenkrollen, z.B. den vorstehend genannten leitfähigen Ringnuten, und/oder Kontaktbuchsen für als Kontaktstifte ausgestaltete Kontaktelemente. Durch den Eingriff von Kontaktstiften in entsprechende Buchsen wird eine sichere und ausreichend störungsfreie elektrische Verbindung sichergestellt, zumal zu jedem Zeitpunkt immer ein Kontaktstift oder Schleifkontakt die elektrisch verbinden zwischen dem Strangelement 11 und der Umlenkrolle aufrecht erhält.

Auch die Lufteinrichtungen 15 sind über zwei Platten 16, 17 am Energieversorgungsstrang 9 befestigt, vgl. Fig. 10a, b. Sie weisen ein steuerbares Ventil 21 auf, das über eine Leitung 22 oder mehrere Leitungen 22 mit den Strangelementen 13 verbunden ist. Die Vakuumeinspeisung in die Strangelemente 12 erfolgt wie nachgehend beschrieben durch Kontaktelemente 23 beispielsweise in Form von Rückschlagventilen.

Die Platten 16, 17 können wie in Figur 11 dargestellt mit seitlichen Führungs-und/oder Gleitflächen 24 versehen sein. Diese können in stationären Führungsnuten geführt sein, um ein Durchhängen des Energieversorgungsstrangs 9 zu verhindern.

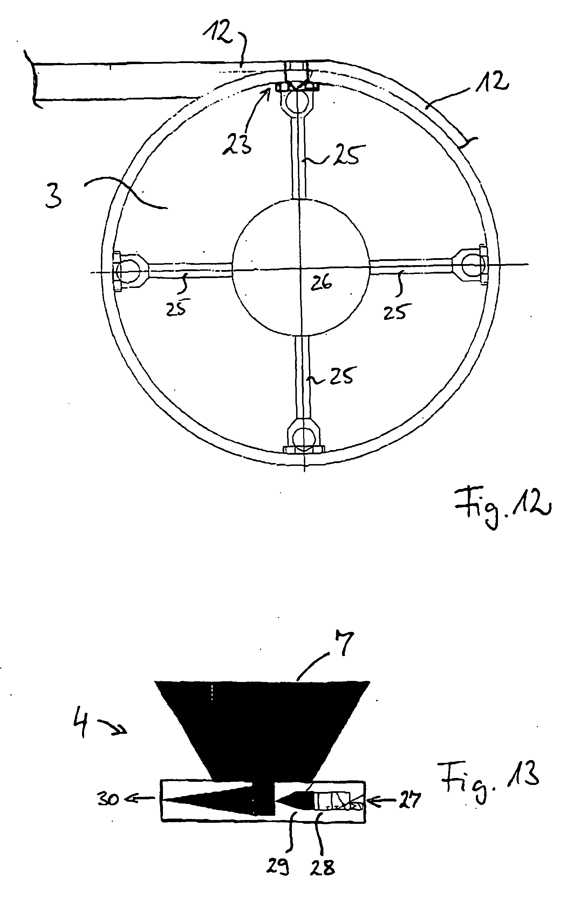

Die Vakuumversorgung erfolgt durch wenigstens eine der Umlenkvorrichtungen 3. Hierzu weist die Umlenkvorrichtung 3 sich radial erstreckende Kanäle 25 auf, vgl. Fig. 12. In die Kanäle 25 erfolgt die zentrale Druckluft- oder Vakuum-Versorgung durch die Welle 26. Wenn nunmehr eine der umlaufenden Lufteinrichtungen 15 mit ihrem Kontaktelement 23 mit dem radial äußeren Ende eines Kanals 25 in Eingriff kommt, vgl. Figur 12, stellt sich aufgrund des Kontaktelements 23 eine Verbindung zwischen dem Kanal 25 und dem Strangelement 12 ein. Das Strangelement 25 wird damit mit Druckluft oder Vakuum aus der Welle 26 versorgt. Die Versorgung findet solange statt, wie das Kontaktelement 23 das radial äußere Ende des Kanals 25 kontaktiert, im dargestellten Beispiel also für eine halbe Umdrehung. Danach löst sich das Kontaktelement, da die Lufteinrichtung 15 sich von der Umlenkvorrichtung 3 wegbewegt. Zweckmäßigerweise sind die Kontaktelemente 23 so entlang des Energieversorgungsstrangs 9 beabstandet, dass bei umlaufendem Energieversorgungsstrang 9 zu jedem Zeitpunkt wenigstens ein Kontaktelement 23 die Verbindung zwischen dem Strangelement 12, z.B. einer hohlen endlosen Rohrleitung, und der Welle 26 herstellt. Somit ist zu jedem Zeitpunkt ein ausreichender Druck bzw. ein ausreichendes Vakuum im Strangelement 12 vorhanden.

Im Betrieb wird der Welle 26 wenigstens einer Umlenkvorrichtung 3 kontinuierlich Druckluft (oder Vakuum) zugeführt. Die Druckluft (bzw. das Vakuum) steht über die Kanäle 25 zu jedem Zeitpunkt auch im Strangelement 12 zur Verfügung. Die Lufteinrichtungen 15 erzeugen, ggf. gesteuert durch die Elektronikeinrichtungen 16 und letztendlich den nicht dargestellten Steuercomputer, aus der Druckluft mittels Venturidüsen 29 (Fig. 13) oder dergleichen ein Vakuum, bzw. leiten das Vakuum gesteuert an die Werkstückaufnahmen 4 weiter. Zweckmäßigerweise werden nur diejenigen Werkstückaufnahmen mit Vakuum beaufschlagt, die ein Werkstück transportieren. Ist an einer Werkstückaufnahme 4 kein Werkstück 5 vorhanden, kann zum Einsparen von Druckluf/Vakuum ein Ventil in der Lufteinrichtung geschlossen werden. Hierzu kann es insbesondere vorgesehen sein, dass an der Werkstückaufnahme 4 oder der Lufteinrichtung 15 ein Sensor angeordnet ist, der einen Druckverlust feststellt, woraus gefolgert werden kann, dass kein Werkstück 5 durch diese Aufnahme 4 gehalten wird, so dass die Luftversorgung zu dieser Werkstückaufnahme 4 unterbrochen werden kann. Alternativ hierzu können auch andere Erkennungsmittel vorgesehen sein, beispielsweise optische Sensoren.

Die Vakuumerzeugung kann wie vorstehend beschrieben in den Lufteinrichtungen 15 oder, wie es in Fig. 13 dargestellt ist, auch in den Werkstückaufnahmen 4 erfolgen. In diesem Fall gelangt durch einen Einlaß 27 Druckluft, gegebenenfalls über ein steuerbares Ventil 28, zu einer Venturidüse 29, die aus der Druckluft ein Vakuum für die Saugglocke (Werkstückkontaktelement 7) erzeugt und die Druckluft über einen Auslass 30 ausbläst.

Anstelle der luftbasierten Werkstückaufnahmen 4 mit dem Strangelement 12 und den Lufteinrichtungen 15 können auch mechanische Greifer oder Elektromagneten verwendet werden. Damit entfällt die Luft/Vakuum-Einspeisung in der Umlenkvorrichtung mittels der Kanäle 25. Auch auf die Lufteinrichtung 15 und das Strangelement 12 in Form einer Rohrleitung kann dann verzichtet werden. Es ergibt sich eine erhebliche konstruktive Vereinfachung.

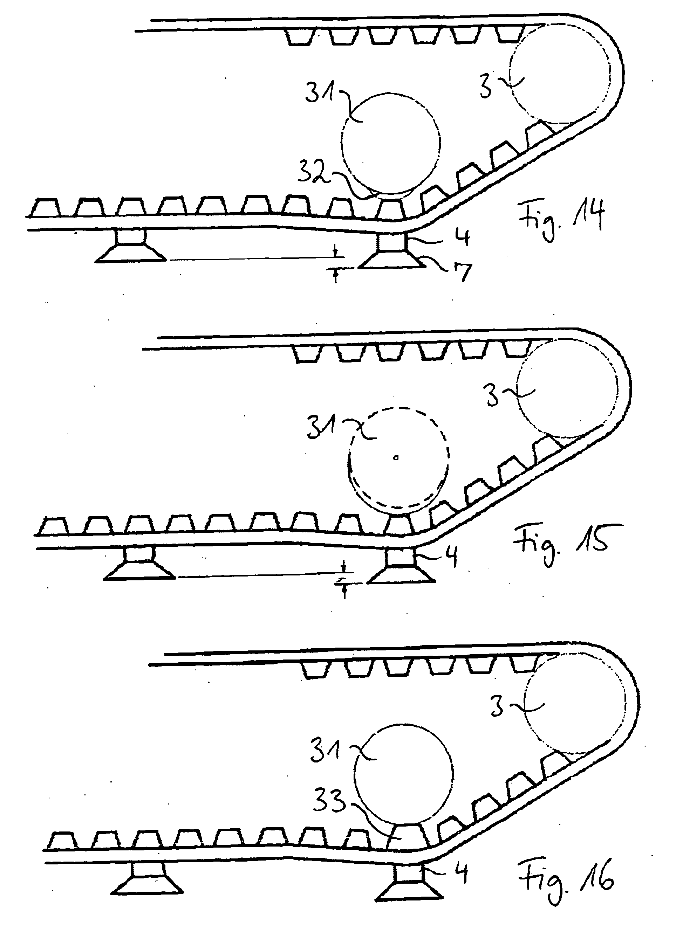

Zur Aufnahme eines Werkstücks 5 ist es zweckmäßig, dass die Werkstückaufnahme 4 in Richtung auf das Werkstück 5 ausgelenkt wird. Hierzu ist zweckmäßigerweise eine Auslenkeinrichtung vorgesehen. Diese kann wie in Figuren 14 bis 17 dargestellt ausgeführt sein.

In Figur 14 ist die Auslenkeinrichtung in die Umlenkrolle 31 integriert. So kann die Umlenkrolle 31 einen Nocken 32 aufweisen. Der Nocken 32 drückt dabei von Innen auf den Fördergurt 2. Hierzu kann die Umlenkrolle 31 mit den Fördergurt 2 mitlaufen, wobei der Nocken 32 und dann mit dem Werkstückaufnahmen 4 derart synchronisiert ist, so dass jede Werkstückaufnahme 4 dann, wenn sie die Umlenkrolle 31 passiert, in Richtung auf ein Werkstück 4 ausgelenkt wird.

Alternativ hierzu kann der Nocken 32 gesteuert ausgeführt sein. Hierzu kann in der Umlenkrolle 31 ein Pneumatikzylinder vorgesehen sein. Ferner ist es möglich, einen Pneumatikschlauch vorzusehen, der die Umlenkrolle 31 umgibt und ihren Durchmesser vergrößert, wenn er mit Druckluft beaufschlagt wird.

In der in Figur 15 dargestellten Ausführungsform wird die gesamte Umlenkrolle 31 ausgelenkt. Die Ruheposition ist durch die gestrichelte Linie dargestellt, während die ausgelenkte Position durch die durchgezogene Linie dargestellt ist. Die Auslenkung kann beispielsweise durch einen Pneumatikzylinder erfolgen.

In der Figur 16 erfolgt die Auslenkung dadurch, dass der Fördergurt 2 an der Stelle einer Werkstückaufnahme 4 nach innen verdickt ist. Durch die Verdickung 33 erfolgt eine Auslenkung der Werkstückaufnahme 4 nach außen, wenn die Werkstückaufnahme 4 an einer beliebigen Umlenkrolle vorbeigeleitet wird. Zweckmäßigerweise ist die Verdickung an Stelle eines Zahns ausgebildet, wenn der Fördergurt 2 ein Zahnriemen ist. Es ergibt sich dann der weitere Vorteil, dass die Befestigungsvorrichtung für die Werkstückaufnahme 4 dick und damit widerstandsfähig und langlebig ausgestaltet werden kann, da die damit einhergehende Verdickung an dieser Stelle erwünscht ist.

Durch die Ausgestaltung gemäß Figuren 14, 15 und 16 wird zweckmäßigerweise ein Hub zwischen 5 mm und 25 mm, vorzugsweise von etwa 10 mm erreicht. Hierdurch können auf einfache Weise Werkstücke 4 aufgenommen werden. Eine mechanische Hubvorrichtung in der Werkstückaufnahme ist nicht erforderlich, so dass die Konstruktion erheblich vereinfacht wird. Insbesondere beim Entstapeln, vgl. Figur 6, ist der erfindungsgemäße Bandförderer besonders vorteilhaft. - Das Werkstück 4 kann auf einfache Weise von der Werkstückaufnahme 4 gelöst werden, indem das Vakuum abgeschaltet, ein Greifer geöffnet oder ein Elektromagnet stromlos geschaltet oder gegebenenfalls umgepolt wird.

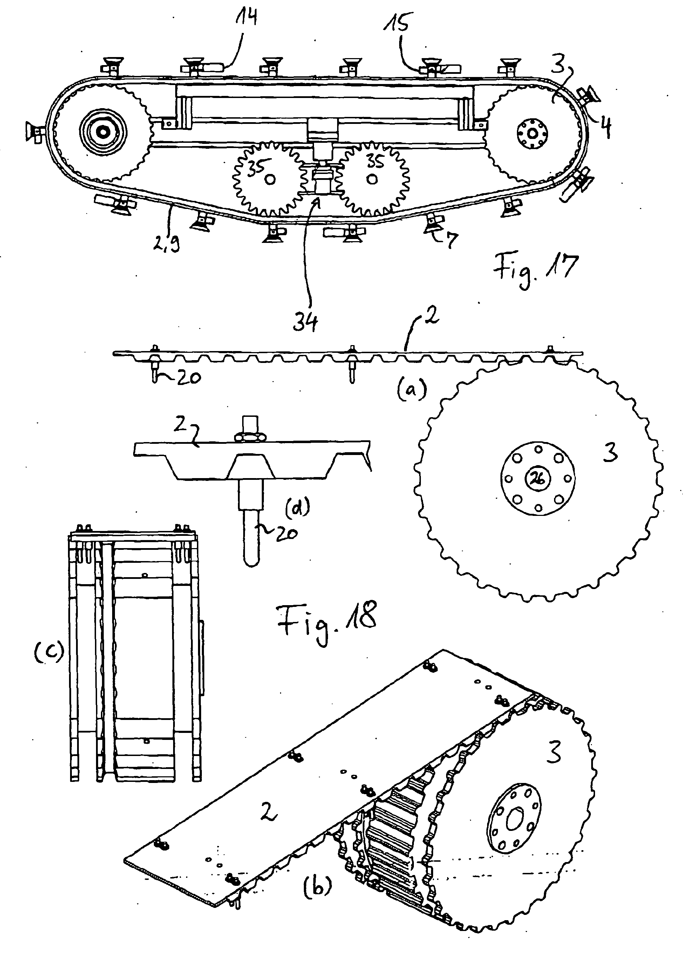

Beim in Figur 17 dargestellten Bandförderer sind zwei Umlenkvorrichtungen 3 vorgesehen, zwischen denen der Fördergurt umläuft. Zusätzlich ist ein vertikal durch einen Pneumatikzylinder oder dergleichen auslenkbarer Schlitten 34 vorgesehen, der hier zwei Rollen 31 aufweist. Der Schlitten 34 kann nach unten ausgelenkt werden, um Werkstückaufnahmen 4 in Richtung auf Werkstücke 5 auszulenken.

Die Auslenkung der Auslenkeinrichtung kann durch Synchronisation stationärer Auslenkeinrichtungen, z.B. dem feststehenden Nocken 32 oder der Verdickung 33, erfolgen. Es ist auch möglich, die Auslenkung gezielt zu steuern. Hierzu kann der nicht dargestellte Steuercomputer verwendet werden. Zu diesem Zweck ist es vorteilhaft, wenn ortsfest angebrachte Lichtschranken oder andere optische, mechanische, magnetische usw. Positionssensoren vorgesehen sind, die die Position der Werkstückaufnahmen 4 feststellen können. Im einfachsten Fall ist lediglich ein Positionssensor vorgesehen; dies reicht aus, da der Abstand und die Anzahl der Werkstückaufnahmen 4 fest vorgegeben sind und sich im Betrieb nicht ändern. Wenn eine Werkstückaufnahme 4 am Positionssensor sich vorbeibewegt, wird ein entsprechendes Signal erzeugt, woraus der Steuercomputer die Position aller Werkstückaufnahmen 4 zu diesem Zeitpunkt bestimmen kann. Auch die Geschwindigkeit des Fördergurts 2 ist messbar, indem die Zeitspanne zwischen zwei aufeinander folgenden Signalen berechnet und mit dem bekannten Abstand zwischen den Werkstückaufnahmen 4 in Bezug gesetzt wird. Somit kann die vertikale Auslenkung einer Werkstückaufnahme 4 in Richtung auf ein Werkstück 5 präzise gesteuert werden.

Gegebenenfalls kann der Energieversorgungsstrang 9 mit dem Fördergurt 2 zu einer mechanischen Einheit kombiniert werden. In diesem Fall verlaufen die Strangelemente 11, 12, 13 in entsprechenden Kanälen im Fördergurt 2; diese Ausgestaltung ist von den Ansprüchen nicht umfasst und lediglich der vollständigen Beschreibung wegen enthalten. Der elektrische und pneumatische Kontakt kann auf gleiche Weise erfolgen, wozu beispielsweise auch mechanische Kontaktelemente 20 in Form elektrischer Kontaktstifte vorgesehen sein können, vgl. Figur 18. Die Kontaktstifte sind dabei vorzugsweise mit dem Zahnriemen verschraubt, vgl. Figur 18d. Die gleiche Befestigung kann bei den Platten 17, 18 der Elektronikeinrichtung 14 vorgesehen sein. Die Strangelemente 11, 12, 13 können auch mit einem flächigen Träger verbunden sein, so dass der Energieversorgungsstrang 9 einen Gurt bildet.

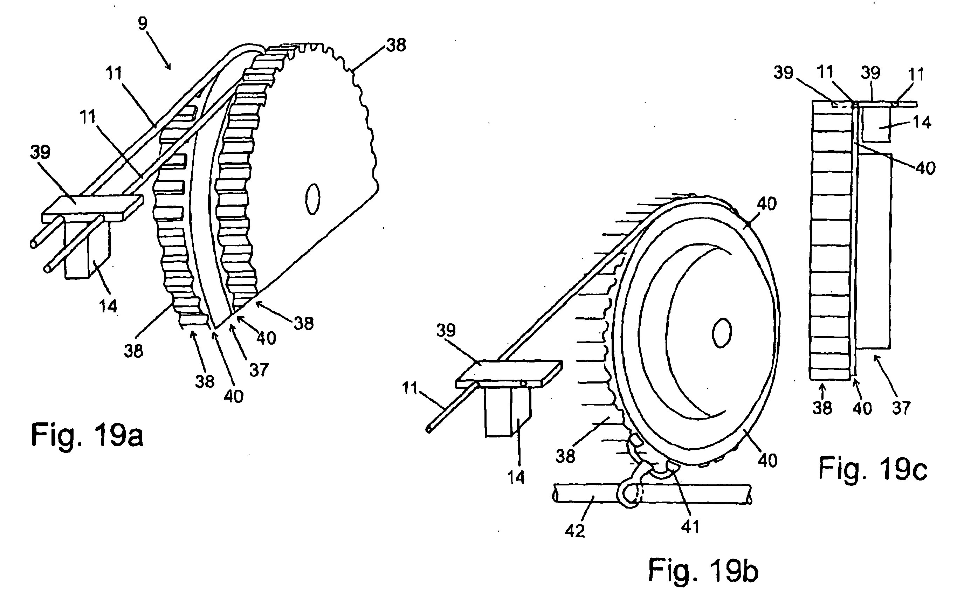

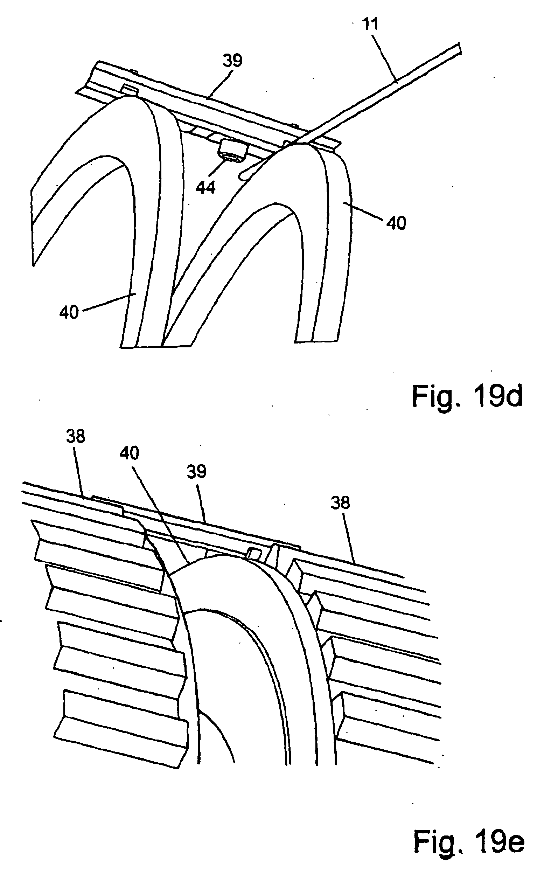

In der Ausführungsform der Fig. 7 ist der Energieversorgungsstrang 9 benachbart zum Fördergurt 2 angeordnet. Alternativ hierzu kann der Energieversorgungsstrang 9 auch unter dem Fördergurt 2 angeordnet sein, vgl. Fig. 19 bis 24.

Zu diesem Zweck ist bevorzugt die Umlenkvorrichtung 3 mit einer mittigen Nut 37 zwischen der Verzahnung 38 versehen, vgl. Fig. 19a. Die Nut 37 ist so bemessen, dass Elektronikeinrichtungen 14 und, falls vorhanden auch Lufteinrichtungen 15, die innen an einer endlosen Schleife von Strangelementen 11 in Form von Stahlseilen oder dergleichen über Trägerplatten 39 befestigt sind, passieren können, wobei die Trägerplatten 39 einstückig oder wie in Fig. 9 bis 11 dargestellt auch aus zwei Platten 17, 18 oder noch mehreren Einzelteilen aufgebaut sein können.

Die Strangelemente 9 dienen dabei der Versorgung der Elektronikeinrichtungen 14 mit elektrischer Energie und/oder elektrischen Steuersignalen und bilden hierzu z.B. einen Zweidrahtbus. Jedes der Strangelemente 9 rollt dabei auf einem zugeordneten Schleifring 40 z.B. aus Messing oder dergleichen ab. Mit Energie und/oder Signalen gespeist werden die Schleifringe 40 über Schleifkontaktvorrichtungen 42, die die elektrische Verbindung zu einer externen Leitung 41 herstellen, vgl. Fig. 19b.

Die Trägerplatte 39 ist dabei zweckmäßigerweise so ausgestaltet, dass sie zwischen zwei aufeinanderfolgende Zähne der Verzahnung 38 passt, wie es oben in Fig. 19c illustriert ist. Vorzugsweise ist sie selbst Zahnförmig derart, dass sie komplementär in den Zwischenraum zwischen zwei Zähne der Verzahnung 38 passt. Dementsprechend ist es zweckmäßig, wenn der Durchmesser des Schleifrings 40 mit dem Durchmesser der Verzahnung 38 zwischen den Zähnen übereinstimmt, jedenfalls kleiner ist als der Durchmesser der Verzahnung 38 an den Zähnen.

Fig. 19d illustriert die beiden Schleifringe 40 mit der hier komplementär zahnförmigen Trägerplatte 39, die ein Befestigungselement 44 für die Elektronikeinrichtung 14 aufweist, und einem der beiden Strangelemente 11. Fig. 19e zeigt zusätzlich die Verzahnung 38 beiderseits der Nut 37, wobei jedoch das Strangelement 11 nicht dargestellt ist.

Ein Abschnitt des in Fig. 19 illustrierten Strangelements 9 ist in Fig. 20 detaillierter dargestellt. Die vorzugsweise zahnförmige Trägerplatte 39 ist an Strangelementen 11 befestigt, greift von diesen Strom und/oder Signale ab und trägt eine Elektronikeinrichtung 14, die sie damit versorgt. Die Elektronikeinrichtung 14 ist mit weiteren Einrichtungen 43 über endliche Strangelemente 13 verbunden, wie es in Fig. 8 illustriert ist. Bei den weiteren Einrichtungen 43 kann es sich um Aktoren oder Sensoren oder Lufteinrichtungen 15 oder weitere Elektronikeinrichtungen 14 oder dergleichen handeln.

Fig. 21 a illustriert einen Energieversorgungsstrang 9 mit zwei parallelen und zwischen zwei Umlenkvorrichtungen 3 umlaufenden Strangelementen 11, allerdings zur Vereinfachung nur im oberen Bereich zwischen den Umlenkvorrichtungen 3. Die Umlenkvorrichtungen 3 weisen jeweils eine Verzahnung 38 auf. Die Strangelemente 11 tragen Elektronikeinrichtungen 14 und Lufteinrichtungen 45. In Fig. 21 b ist zusätzlich der Fördergurt 2 auch im unteren Bereich zwischen den Umlenkvorrichtungen 3 dargestellt. Der Fördergurt 2 ist ebenfalls verzahnt und wird von den Umlenkvorrichtungen 3 angetrieben.

Der in Fig. 21 c vergrößert dargestellte Ausschnitt 46 der Fig. 21 b illustriert die Elektronikeinrichtungen 14 an den Strangelementen 11 z.B. in Form von Stahlseilen sowie Lufteinrichtungen 45, die wie nachstehend beschrieben mit Druckluft oder Vakuum versorgt werden. Jede Lufteinrichtung 45 ist zweckmäßigerweise einer, ggf. auch mehreren, Ventileinrichtungen 46 zugeordnet und über nicht dargestellte Leitungen für Druckluft oder Vakuum damit verbunden, um an der Ventileinrichtung 46 ein Vakuum für die Werkstückaufnahme 4 bereitzustellen, z.B. über eine Venturidüse. Die Ventileinrichtung 46 kann von einer zugeordneten Elektronikeinrichtung betätigt (an/aus) werden, die hierzu ebenfalls mit der Ventileinrichtung 46 verkabelt sein kann, was jedoch nicht dargestellt ist, da bevorzugt die Ventileinrichtung 46 nicht gesteuert wird sondern die Lufteinrichtung 45 das Vakuum oder die Druckluft zur Ventileinrichtung 46 schaltet.

Zur Versorgung mit Druckluft oder Vakuum sind die Lufteinrichtungen 45 an Strangelemente 12 gekoppelt, z.B. Schläuche, vgl. Fig. 22a. Die Kopplung kann dabei wie in Fig. 10 und 11 dargestellt erfolgen. Auch können weitere Strangelemente 13 vorgesehen sein, so dass ein Energieversorgungsstrang 9 wie in Fig. 7, 8 mit der Ankopplung wie in Fig. 9 bis 11 entsteht. Fig. 22b zeigt die Ausführung aus Fig. 22a mit aufliegendem Fördergurt 2, der die Ventileinrichtungen 46 und Werkstückaufnahmen 4 trägt. Der Fördergurt 2 und der Energieversorgungsstrang 9 können über Kopplungselemente 47 miteinander gekoppelt sein.

Die Einkopplung der elektrischen Energie sowie des Luftdrucks bzw. Vakuums kann auf verschiedene Weise implementiert werden, wobei verschiedene Ausführungen für Luftdruck/Vakuum-Einkopplung mit verschiedenen Ausführungen für die Einkopplung der elektrischen Energie kombiniert werden können, also unabhängig voneinander und hier nur beispielhaft zusammen gezeigt sind. Mögliche lmplementierungen werden anhand der Figuren 23, 24 und 25 beschrieben. Fig. 23 zeigt dabei einen Querschnitt durch eine Umlenkrolle 3. Hierbei kann es sich um die in Fig. 12 dargestellte Umlenkrolle 3 oder eine andere handeln. Fig. 24 zeigt die obere Hälfte des Querschnitts der Fig. 23 ohne Luftelemente, aber dafür mit Elementen für die Einspeisung elektrischer Energie und/oder Signale. Fig. 25 zeigt eine mögliche Ausgestaltung einer Ventileinrichtung 46 im Schnitt.

Die Einspeisung elektrischer Energie und/oder elektrischer Signale, die über eine Leitung 48 von einem Netzteil bzw. einer Steuerung zugeführt werden, vgl. Fig. 23, erfolgt zunächst über einen Kontakt 49, z.B. einen Kohlestift, der über eine Spannvorrichtung 50 an einen äußeren Schleifring 51 gedrückt wird. Der Schleifring 51 ist z.B. über eine Verschraubung 52 elektrisch leitend mit dem Schleifring 40 verbunden. Dort greift das Strangelement 11 in Schleifkontakt Strom und/oder Signale ab. Illustriert ist dies in Fig. 24 nur für den rechten Schleifring 40. Der linke Schleifring 40 kann analog mit einer weiteren Leitung verbunden werden.

Die Einspeisung von Druckluft oder Vakuum kann wie in Fig. 23 illustriert erfolgen. Hierzu wird ein Reservoir 53 z.B. über eine Einspeisung 54 mit einem externen Druckluftschlauch gekoppelt. Die Einspeisung 54 kann eine Drehkupplung umfassen. Das Reservoir 53 kann auch anderweitig an den externen Druckluftschlauch gekoppelt werden. Über einen Kanal 25 wird die Druckluft an den Außenumfang geleitet und mündet vorzugsweise in der Verzahnung 38, und zwar zweckmäßigerweise zwischen zwei Zähnen. An der Mündung kann ein nicht dargestelltes Rückschlagventil vorgesehen sein, damit keine Druckluft entweicht, wenn die Mündung frei liegt, vgl. die linke Hälfte in Fig. 12, während Druckluft weitergegeben werden kann, wenn die Mündung koppelt, vgl. die rechte Hälfte in Fig. 12.

Koppeln kann die Mündung mit einem Gegenstück in einer Lufteinrichtung 45 oder mit einem Gegenstück im Fördergurt 2.

Die Kopplung mit der Lufteinrichtung 45 entspricht derjenigen in Fig. 12 für die Ausführungsformen, in denen Fördergurt 2 und Energieversorgungsstrang 9 nebeneinander angeordnet sind. Hierzu sind die Lufteinrichtungen 45 breit genug auszugestalten, damit sie mit dem Kanal 25 überlappen, der ja nicht mehr mittig in der Umlenkrolle 3 verläuft, sondern seitlich der Nut 37. Im Bereich der Einspeisung kann zudem der Fördergurt 2 die Lufteinrichtungen 45 an die Mündungen andrücken, so dass eine verlustfreie Drucklufteinspeisung in die Rohre 12 sichergestellt wird. Hierbei weisen die Lufteinrichtungen 45 zweckmäßigerweise die Form eines Zahns des Fördergurts 2 auf, bei dem an den jeweiligen Stellen ein entsprechender Zahn ausgespart ist.

Die Kopplung mit einem Gegenstück im Fördergurt 2 ist in Fig. 25 illustriert, die einen Querschnitt an einer Stelle mit einer beispielhaften Ventileinrichtung 46 zeigt. Eine Durchbrechung 55 im Fördergurt 2 und einer Zwischenplatte 56, die der Montage der Ventileinrichtung 46 dient, fluchtet mit der Mündung des Kanals 25. Druckluft wird aus dem Kanal 25 durch die Durchbrechung 55 zu einem Rückschlagventil 57 geleitet. Das Rückschlagventil 57 öffnet, wenn es aus der Durchbrechung 55 mit Druckluft beaufschlagt wird. Die Druckluft wird dann in den Kanal 58 geleitet. Dort gelangt sie über eine weitere Durchbrechung 59 in einen Luftkanal 60, der ein separater Luftkanal sein kann oder das Strangelement 12. Druckluft aus dem Luftkanal 60 gelangt über ein insbesondere schaltbares Ventil 61, das hier am Fördergurt 2 befestigt dargestellt ist aber auch in Lufteinrichtungen 45 angeordnet sein kann, über eine weitere Durchbrechung 62 und einen Kanal 63 zu einem Vakuumerzeuger 64, z.B. zu einer Venturidüse. Die Druckluft wird über einen Auslass 65 ausgeblasen. Vakuum wird über einen Kanal 66 an die Werkstückaufnahme 4 geleitet.

### Bezugszeichenliste

- 1: Bandförderer
- 2: Fördergurt
- 3: Umlenkvorrichtung
- 4: Werkstückaufnahme
- 5: Werkstück
- 6: Förderrichtung
- 7, 7', 7": Werkstückkontaktelement
- 8: Stapel
- 9: Energieversorgungsstrang
- 10: Nut
- 11, 12, 13: Strangelement
- 14: Elektronikeinrichtung
- 15: Lufteinrichtung
- 17, 18: Platten
- 19: Schrauben
- 20: Kontaktelement
- 21: Ventil
- 22: Leitung
- 23: Kontaktelement
- 24: Führungs- und/oder Gleitfläche
- 25: Kanal
- 26: Welle
- 27: Einlass
- 28: Pneumatikventil
- 29: Venturidüse
- 30: Auslass
- 31: Umlenkrolle
- 32: Nocken
- 33: Verdickung
- 34: Schlitten
- 35: Rolle
- 36: Versorgungsleitung
- 37: Nut
- 38: Verzahnung
- 39: Trägerplatte
- 40: Schleifring
- 41: Schleifkontaktvorrichtung
- 42: Leitung
- 43: Einrichtung
- 44: Befestigungselement
- 45: Lufteinrichtung
- 46: Ausschnitt
- 47: Kopplungselement
- 48: Leitung
- 49: Kontakt
- 50: Spannvorrichtung
- 51: Schleifring
- 52: Verschraubung
- 53: Reservoir
- 54: Einspeisung
- 55: Durchbrechung
- 56: Zwischenplatte
- 57: Rückschlagventil
- 58: Kanal
- 59: Durchbrechung
- 60: Luftkanal
- 61: Ventil
- 62: Durchbrechung
- 63: Kanal
- 64: Vakuumerzeuger
- 65: Auslass
- 66: Kanal

## Patentansprüche

1. Bandförderer (1) mit einem zwischen Umlenkrollen (3, 31) umlaufenden endlosen Fördergurt (2), an dem eine Werkstückaufnahme (4) befestigt ist, und mit einem synchron umlaufenden endlosen Energieversorgungsstrang (9), **dadurch gekennzeichnet, dass** der Energieversorgungsstrang (9) separat vom Fördergurt (2) ausgebildet ist.

2. Bandförderer nach Anspruch 1, **dadurch gekennzeichnet, dass** der Energieversorgungsstrang (9) ein endloses Strangelement (11, 12) aufweist.

3. Bandförderer nach Anspruch 2, **dadurch gekennzeichnet, dass** das Strangelement (12) ein Kanal für Druckluft, Vakuum, eine Flüssigkeit oder ein Fluid ist.

4. Bandförderer nach Anspruch 2 oder 3, **dadurch gekennzeichnet, dass** das Strangelement (11) elektrisch leitfähig ist.

5. Bandförderer nach einem der Ansprüche 1 bis 4, **dadurch gekennzeichnet, dass** der Energieversorgungsstrang (9) eine Lufteinrichtung (15) und/oder eine Elektronikeinrichtung (14) trägt, die Druckluft oder Vakuum bzw. elektrische Energie und/oder elektrische Signale aus dem Energieversorgungsstrang (9) entnehmen.

6. Bandförderer nach einem der Ansprüche 1 bis 5, **dadurch gekennzeichnet, dass** der Energieversorgungsstrang (9) über eine Umlenkrolle (3) mit einer externen Energie- und/oder Signalquelle verbunden ist.

7. Bandförderer nach einem der Ansprüche 1 bis 6, **dadurch gekennzeichnet, dass** die Lufteinrichtungen (15) jeweils einer Werkstückaufnahme (4) Druckluft oder Vakuum gesteuert zuführen.

8. Bandförderer nach einem der Ansprüche 1 bis 7, **dadurch gekennzeichnet, dass** der Energieversorgungsstrang (9) neben oder unter dem Fördergurt (2) angeordnet ist.

9. Bandförderer nach Anspruch 8, **dadurch gekennzeichnet, dass** die Umlenkrollen (3, 31) eine umlaufende Nut (37) am Außenumfang aufweisen.

10. Bandförderer nach Anspruch 9, **dadurch gekennzeichnet, dass** beiderseits der Nut (37) ein Schleifring (40) für eine Versorgung des Energieversorgungsstrangs (9) mit elektrischer Energie und/oder elektrischen Signalen vorgesehen ist.

11. Umlenkrolle (3) für einen Bandförderer nach einem der Ansprüche 1 bis 10, mit einem Abschnitt zum Antreiben eines Fördergurts (2), an dem eine Werkstückaufnahme (4) befestigt ist, **dadurch gekennzeichnet, dass** die Umlenkrolle (3) einen Abschnitt zum Einspeisen von Energie in einem und zum Antreiben eines separat zum Fördergurt (2) ausgebildeten Energieversorgungsstrangs (9) synchron zum Fördergurt (2) aufweist.

12. Umlenkrolle (3) nach Anspruch 11, **dadurch gekennzeichnet, dass** sie eine umlaufende Nut (37) am Außenumfang aufweist.

## Claims

1. Belt conveyor (1), having an endless conveyor belt (2) which revolves between deflection rolls (3, 31), to which a workpiece receptacle (4) is fastened, and having a synchronously revolving endless energy supply line (9), **characterised in that** the energy supply line (9) is formed separately from the conveyor belt (2).

2. Belt conveyor according to Claim 1, **characterised in that** the energy supply line (9) has an endless line element (11, 12).

3. Belt conveyor according to Claim 2, **characterised in that** the line element (12) is a duct for compressed air, vacuum, a liquid or a fluid.

4. Belt conveyor according to Claim 2 or 3, **characterised in that** the line element (11) is electrically conductive.

5. Belt conveyor according to one of Claims 1 to 4, **characterised in that** the energy supply line (9) bears an air apparatus (15) and/or an electronic apparatus (14), which draw compressed air or vacuum or electrical energy and/or electrical signals from the energy supply line (9).

6. Belt conveyor according to one of Claims 1 to 5, **characterised in that** the energy supply line (9) is connected to an external energy and/or signal source by means of a deflection roll (3).

7. Belt conveyor according to one of Claims 1 to 6, **characterised in that** the air apparatus (15) each supply one workpiece receptacle (4) with compressed air or vacuum in a controlled manner.

8. Belt conveyor according to one of Claims 1 to 7, **characterised in that** the energy supply line (9) is arranged adjacently to or under the conveyor belt (2).

9. Belt conveyor according to Claim 8, **characterised in that** the deflection rolls (3, 31) have a groove (37) running round the outer circumference.

10. Belt conveyor according to Claim 9, **characterised in that** a slip ring (40) is provided on both sides of the groove (37) for supplying the energy supply line (9) with electrical energy and/or electrical signals.

11. Deflection roll (3) for a belt conveyor according to one of Claims 1 to 10, having a section for driving a conveyor belt (2) on which a workpiece receptacle (4) is fastened, **characterised in that** the deflection roll (3) has a section for feeding energy and for driving an energy supply line (9) which is formed separately from the conveyor belt (2) synchronously with the conveyor belt (2).

12. Deflection roll (3) according to Claim 11, **characterised in that** it has a groove (37) running around the outer circumference.

## Revendications

1. Transporteur à bande (1) comprenant une courroie de transport (2) continue, tournant entre des rouleaux de renvoi (3, 31), sur lequel est fixé un logement de pièce (4), et d'une branche d'alimentation en énergie (9) continue, tournant de façon synchrone, **caractérisé en ce que** la branche d'alimentation en énergie (9) est conçue séparément de la courroie de transport (2).

2. Transporteur à bande selon la revendication 1, **caractérisé en ce que** la branche d'alimentation en énergie (9) présente un élément de branche (11, 12) continu.

3. Transporteur à bande selon la revendication 2, **caractérisé en ce que** l'élément de branche (12) est un conduit pour de l'air comprimé, du vide, un liquide ou un fluide.

4. Transporteur à bande selon la revendication 2 ou 3, **caractérisé en ce que** l'élément de branche (11) est électriquement conducteur.

5. Transporteur à bande selon l'une des revendications 1 à 4, **caractérisé en ce que** la branche d'alimentation en énergie (9) porte un dispositif d'air (15) et/ou un dispositif d'électronique (14), qui prélève de l'air comprimé ou du vide ou de l'énergie électrique et/ou des signaux électriques sur la branche d'alimentation en énergie (9).

6. Transporteur à bande selon l'une des revendications 1 à 5, **caractérisé en ce que** la branche d'alimentation en énergie (9) est reliée par un rouleau de renvoi (3) à une source d'énergie et/ou une source de signal externe.

7. Transporteur à bande selon l'une des revendications 1 à 6, **caractérisé en ce que** les dispositifs d'air (15) amènent de l'air comprimé ou du vide de façon commandée à respectivement un logement de pièce (4).

8. Transporteur à bande selon l'une des revendications 1 à 7, **caractérisé en ce que** la branche d'alimentation en énergie (9) est disposée à côté ou au-dessous de la courroie de transport (2).

9. Transporteur à bande selon la revendication 8, **caractérisé en ce que** les rouleaux à renvoi (3, 31) présentent une rainure (37) périphérique sur le pourtour extérieur.

10. Transporteur à bande selon la revendication 9, **caractérisé en ce qu'**une bague de frottement (40) est prévue des deux côtés de la rainure (37) pour une alimentation de la branche d'alimentation en énergie (9) avec de l'énergie électrique et/ou des signaux électriques.

11. Rouleau de renvoi (3) pour un transporteur à bande selon l'une des revendications 1 à 10, comprenant un tronçon pour l'entraînement d'une courroie de transport (2), sur lequel est fixé un logement de pièce (4), **caractérisé en ce que** le rouleau de renvoi (3) présente un tronçon pour l'injection d'énergie d'une part et pour l'entraînement d'une branche d'alimentation en énergie (9), conçue séparément de la courroie de transport (2), de façon synchrone par rapport à la courroie de transport (2).

12. Rouleau de renvoi (3) selon la revendication 11, **caractérisé en ce qu'**il présente une rainure (37) périphérique sur le pourtour extérieur.
